# EUROPÄISCHE PATENTSCHRIFT

(11) **EP 1 412 149 B1**
(45) Veröffentlichungstag und Bekanntmachung des Hinweises auf die Patenterteilung: **14.03.2007**
(21) Anmeldenummer: 02762385.9
(22) Anmeldetag: 20.07.2002
(51) Int. Cl.: B28D 5/02, B23D 61/02

(54) **WAFER-SCHNEIDEMASCHINE**
MACHINE FOR CUTTING WAFERS
MACHINE A DECOUPER DES PLAQUETTES

(30) Priorität: 26.07.2001 DE 10136534
(43) Veröffentlichungstag der Anmeldung: 28.04.2004
(73) Patentinhaber: Disco Hi-Tec Europe GmbH, 85551 Kirchheim (DE)
(72) Erfinder: PRIEWASSER, Karl, c/oDisco Hi-Tec Europe GmbH, 85551 Kirchheim (DE)
(74) Vertreter: Weber, Joachim
(86) Internationale Anmeldenummer: PCT/EP2002/008146
(87) Internationale Veröffentlichungsnummer: WO 2003/011546

(56) Entgegenhaltungen:
- EP-A- 1 099 511
- DE-U- 29 605 728
- US-A- 6 102 023
- US-A- 6 155 247
- PATENT ABSTRACTS OF JAPAN vol. 2000, no. 22, 9. März 2001 (2001-03-09) -& JP 2001 129822 A (TOKYO SEIMITSU CO LTD), 15. Mai 2001 (2001-05-15)
- DATABASE WPI Section PQ, Week 199338 Derwent Publications Ltd., London, GB; Class P64, AN 1993-301092 XP002222309 -& SU 1 761 516 A (PRECISE ELTRN EQUIP CONS BUR), 15. September 1992 (1992-09-15)

## Beschreibung

Die Erfindung bezieht sich auf eine Wafer-Schneidemaschine gemäß dem Oberbegriff des Hauptanspruchs.

Im Einzelnen betrifft die Erfindung eine Wafer-Schneidemaschine mit zwei koaxial zueinander angeordneten, drehbaren Arbeitsspindeln, welche jeweils an ihrem Ende eine an einer Nabe gelagerte Trennscheibe tragen und welche relativ zu einem mit einem wafer-bestückbaren Arbeitstisch bewegbar sind.

Derartige Wafer-Schneidemaschinen sind aus dem Stand der Technik in unterschiedlichsten Ausgestaltungsformen bekannt. Sie dienen dazu, die auf einem Wafer aufgebrachten einzelnen, in der Herstellung befindlichen Chips oder sonstigen elektronischen Bauelementen abzutrennen.

Die einzelnen, meist quadratischen Chips oder Chiprohlinge werden dabei zunächst in Form von Streifen aus dem Wafer ausgeschnitten. Jeder Streifen weist die Breite des zu erzeugenden Chips oder Chiprohlings auf. Nachdem die Trennscheiben mehrere zueinander parallele Bahnen aus dem Wafer ausgeschnitten haben, wird der Arbeitstisch zusammen mit dem Wafer um 90° gedreht, um die zweite Anordnung von Trennschnitten vorzunehmen.

Der Stand der Technik zeigt hierbei Zweispindel-Wafer-Schneidemaschinen, welche zwei Arbeitsspindeln umfassen, an denen jeweils eine Trennscheibe gelagert ist. Die Bearbeitungszeit lässt sich durch die Verwendung zweier Trennscheiben, verglichen mit Wafer-Schneidemaschinen mit nur einer Trennscheibe, halbieren. Dabei ist es auch bekannt, mittels einer der Trennscheiben einen V-förmigen Schnitt vorzunehmen, während mittels einer zweiten Trennscheibe der eigentliche Trennvorgang durchgeführt wird. Beide Trennscheiben können an einer einzigen Arbeitsspindel in Kombination montiert werden, um einen entsprechenden abgeschrägten Schnitt zu erzeugen.

Bei den bekannten Wafer-Schneidemaschinen erweist es sich als nachteilig, dass - bedingt durch die Aufnahme und Konstruktion der Arbeitsspindeln und der Trennscheibe - keine sehr schmalen parallelen Schnitte durchgeführt werden können, da eine entsprechende Annäherung der Trennscheiben zueinander nicht möglich ist. Dies führt zu einer verringerten Leistungsfähigkeit und Effizienz der Wafer-Schneidemaschine.

Die US-A-6155247 beschreibt eine Wafer-Schneidemaschine, bei welcher zwei Trennscheiben verwendet werden, um einzelne Streifen aus dem Wafer zu schneiden. Die beiden Trennscheiben sind jeweils an ihrer Rückseite an der Arbeitsspindel positioniert und mittels einer Spannvorrichtung befestigt. Dabei sind die Spannvorrichtungen so ausgebildet, dass sie über die Oberfläche der Trennscheiben vorstehen, so dass der Abstand der Trennscheiben nicht beliebig weit zueinander angenähert werden kann.

Der Erfindung liegt die Aufgabe zu Grunde, eine Wafer-Schneidemaschine der Eingangs genannten Art zu schaffen, welche bei einfachem Aufbau und einfacher, sicherer Handhabbarkeit die effiziente Erzeugung nahe beieinander liegender paralleler Schnitte ermöglicht.

Erfindungsgemäß wird die Aufgabe durch die Merkmale des Hauptanspruchs gelöst, die Unteransprüche zeigen weitere vorteilhafte Ausgestaltungen der Erfindung.

Die erfindungsgemäße Wafer-Schneidemaschine zeichnet sich durch eine Reihe erheblicher Vorteile aus.

Erfindungsgemäß ist somit vorgesehen, dass die beiden Trennscheiben zueinander weisend an den Arbeitsspindeln angeordnet sind, wobei die Nabe jeder Trennscheibe jeweils an der Rückseite der Trennscheibe positioniert und an der Arbeitsspindel angeordnet ist. Die beiden Trennscheiben können somit auf einen sehr geringen Abstand zueinander angenähert werden, sodass präzise, sehr dünne Schnittabstände der beiden parallel wirkenden Trennscheiben möglich sind. Somit ist es unter Verwendung der erfindungsgemäßen Wafer-Schneidemaschine möglich, mit beiden Trennscheiben gleichzeitig zu arbeiten, um schmale Streifen von Chips, Chiprohlingen oder ähnlichem aus dem Wafer auszuschneiden bzw. von diesem zu trennen oder entsprechende Trennkerben zu erzeugen.

Bei der Erfindung ist vorgesehen, dass die Arbeitsspindeln jeweils in axialer Richtung bewegbar sind. Hierdurch kann in präziser Weise eine Zustellbewegung der Trennscheiben erfolgen.

Es versteht sich, dass die erfindungsgemäßen Trennscheiben in Form flacher Scheiben oder flacher Ringe ausgebildet sein können. Es ist jedoch auch möglich, diese in beliebiger Weise hinsichtlich ihres Querschnittes zu konfigurieren, um beispielsweise mittels eines flachen, scheibenförmigen Bereichs einen Trennschnitt durchzuführen, während ein anschließender Bereich konisch oder abgeschrägt ausgebildet ist, um die Kanten der Chipstreifen, Chiprohlingstreifen oder IC-Streifen entsprechend zu bearbeiten.

Die beiden Trennscheiben sind erfindungsgemäß zumindest bis zur Bearbeitungsbreite eines in dem Wafer zu bearbeitenden IC-Streifens oder Chipstreifens aneinander annäherbar. Somit ist auch die Erzeugung sehr schmaler Streifen möglich.

Im Rahmen der Erfindung kann es weiterhin vorteilhaft sein, wenn die Trennscheibe jeweils fest mit der Nabe verbunden ist und die Nabe selbst lösbar an der Arbeitsspindel gelagert ist. Hierdurch kann der Austausch der Trennscheiben auf besonders einfache Weise mit der entsprechenden Präzision erfolgen.

Im Folgenden wird die Erfindung anhand eines Ausführungsbeispiels in Verbindung mit der Zeichnung beschrieben. Dabei zeigt:
- Fig. 1: eine perspektivische, vereinfachte Darstellung eines Ausführungsbeispiels einer erfindungsgemäßen Wafer-Schneidemaschine,
- Fig. 2: eine schematische Seitenansicht der beiden Arbeitsspindeln mit Trennscheiben und Naben,
- Fig. 3: eine vereinfachte Draufsicht auf einen Arbeitstisch mit einem Wafer sowie auf zwei Arbeitspositionen der erfindungsgemäßen Trennscheibenpaare, die analog der Darstellung der Fig. 2 gezeigt sind,
- Fig. 4: eine Explosionsansicht des Endbereichs einer Arbeitsspindel mit zugehöriger Nabe und Trennscheibe, und
- Fig. 5: die Zusammenstellung analog Fig. 4 im fertig montierten Zustand.

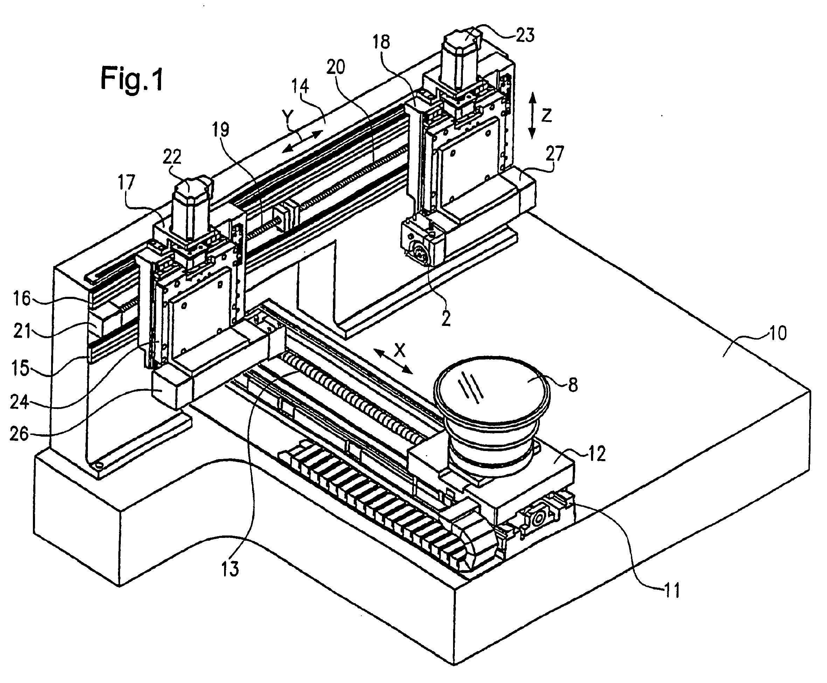

Die Fig. 1 zeigt eine perspektivische Ansicht der erfindungsgemäßen Wafer-Schneidemaschine. Diese umfasst ein Gestell 10, an welchem eine Führung 11 befestigt ist, auf welcher ein Schlitten 12 längs verschiebbar gehaltert ist. Der Schlitten 12 ist beispielsweise mittels einer Kugelspindel 13 bewegbar. Der Schlitten 12 trägt einen Arbeitstisch 8, der um eine senkrechte Achse mittels eines nicht dargestellten Antriebs drehbar ist.

An dem Gestell 10 ist eine Konsole 14 befestigt, die zueinander parallele, horizontale Führungen 15, 16 aufweist, an welchen Schlitten 17, 18 horizontal verfahrbar gelagert sind. Die Bewegung erfolgt über Kugelspindeln 19, 20 oder ähnlichen Einrichtungen, die in bekannter Weise mittels eines Antriebs 21 bewegbar sind.

An den beiden Schlitten 17 und 18 sind jeweils Motore 22 und 23 montiert, die über ein nicht gezeigtes Antriebssystem zur vertikalen Verschiebung von Trägerschlitten 24, 25 dienen.

An den Trägerschlitten 24, 25 ist jeweils ein Lagerbock 26, 27 angeordnet, der jeweils eine Arbeitsspindel 1, 2 trägt. Es versteht sich, dass ein entsprechender Antrieb für die Arbeitsspindel 1, 2 vorgesehen ist, der im Einzelnen nicht dargestellt ist.

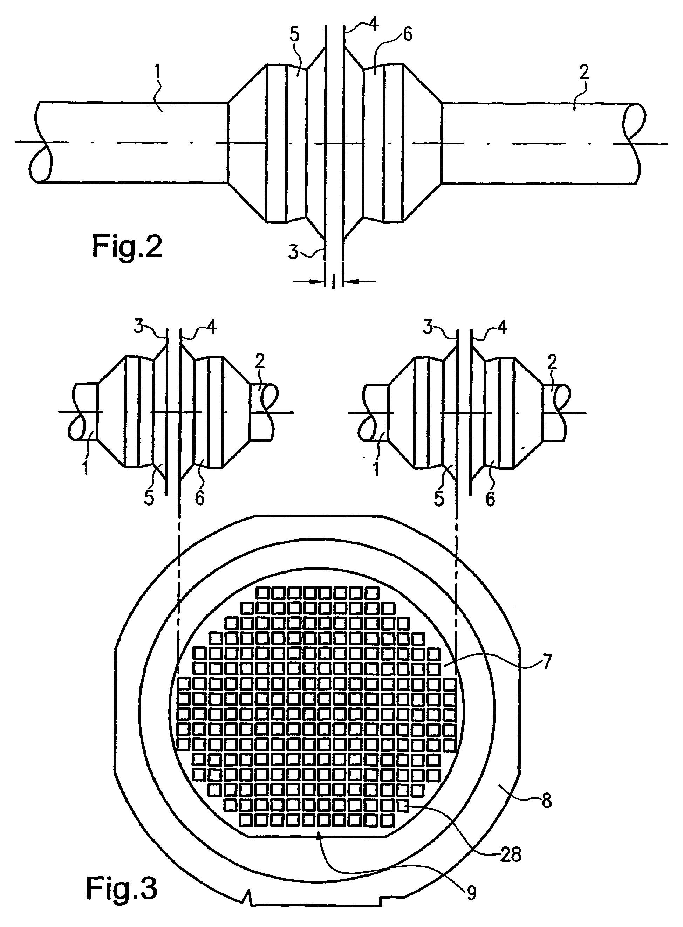

Die Fig. 1 zeigt weiterhin, dass die Führung 11 zu einer Verschiebung in X-Richtung dient, um den Arbeitstisch 8 sowie einen auf diesem befestigten Wafer 7 (siehe Fig. 3) in X-Richtung zu verfahren. Mittels der Führungen 15, 16 ist eine Bewegung in Y-Richtung möglich, um die Arbeitsspindeln 1, 2 in diese Richtung zu bewegen. Eine Bewegung in Z-Richtung erfolgt durch vertikale Verschiebung der Trägerschlitten 24, 25 an den Schlitten 17, 18.

Die Fig. 2 zeigt in schematischer Seitenansicht jeweils den Endbereich der beiden Arbeitsspindeln 1, 2, an welchem Naben 5, 6 gelagert sind, die stirnseitig jeweils eine Trennscheibe 3 bzw. 4 tragen. Aus Fig. 2 ergibt sich, dass die beiden Trennscheiben 3, 4 sehr nahe zueinander angeordnet werden können, um eine Bearbeitungsbreite 1 zu realisieren.

Die Fig. 3 zeigt die Zuordnung während unterschiedlicher Arbeitsgänge. In der Draufsicht ist der Arbeitstisch 8 mit einem darauf befestigten oder gehalterten Wafer 7 gezeigt. Auf dem Wafer 7 sind eine Vielzahl von einzelnen Chips, Chiprohlingen oder IC's ausgebildet, die mittels der durch die Trennscheiben 3, 4 durchzuführenden Trennschnitte vereinzelt werden sollen.

In Zuordnung zu den durch die einzelnen IC's 28 gebildeten IC-Streifen 9 sind die Trennscheiben 3, 4 jeweils in extremen Randpositionen ihres Bewegungsbereiches gezeigt. Aus der Darstellung ergibt sich, dass mittels eines einzigen Schnittes jeweils eine komplette Reihe oder ein kompletter IC-Streifen 9 bearbeitet werden kann. Nach dem Trennen oder Bearbeiten der einzelnen IC-Streifen 9 erfolgt eine Drehung des Arbeitstisches 8, um eine vertikale Achse um 90°, um die einzelnen IC's, Chips oder Chiprohlinge restlich zu bearbeiten bzw. zu trennen.

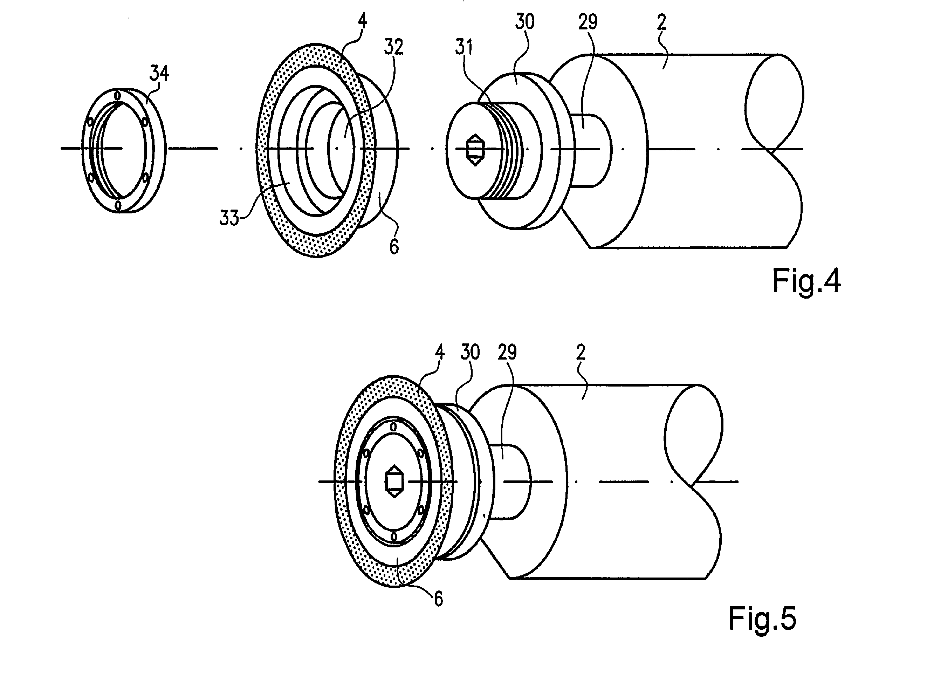

Die Fig. 4 und 5 zeigen den konstruktiven Aufbau des Endbereichs der Arbeitsspindeln 1 bzw. 2. Die Arbeitsspindel 1 bzw. 2 weist jeweils einen Schaft 29 auf, an dem einstückig eine Anlage 30 oder eine Schulter ausgebildet ist. An die Anlage 30 schließt sich ein Gewindeansatz 31 an, welcher in eine Ausnehmung 32 einer Nabe 5 bzw. 6 einführbar ist. Die Ausnehmung 32 geht in einen vergrößerten Bereich 33 über, in welchen eine Mutter 34 einführbar ist. Die Mutter 34 ist auf den Gewindeansatz 31 aufschraubbar, um in der Endfigur 5 gezeigten Weise die Trennscheibe 3 bzw. 4 an der Spindel 1 bzw. 2 zu befestigen. Durch die Tiefe des vergrößerten Bereichs 33 wird die Mutter 34 vollständig aufgenommen, sodass sich eine ebene, flache Bearbeitungsfläche der Trennscheibe 3, 4 ergeben kann.

Wie bereits erwähnt, ist es nicht erforderlich, dass die Trennscheibe in Form einer flachen Scheibe oder eines flachen Ringes ausgebildet ist. Es ist vielmehr auch eine konturierte Querschnittsgestaltung möglich. Die Trennscheibe kann in üblicher Weise ausgestaltet sein, beispielsweise durch Belegung mit Diamantschleifkörpern oder ähnlichem.

### Bezugszeichenliste

- 1: Arbeitsspindel
- 2: Arbeitsspindel
- 3: Trennscheibe
- 4: Trennscheibe
- 5: Nabe
- 6: Nabe
- 7: Wafer
- 8: Arbeitstisch
- 9: IC-Streifen
- 10: Gestell
- 11: Führung
- 12: Schlitten
- 13: Kugelspindel
- 14: Konsole
- 15: Führung
- 16: Führung
- 17: Schlitten
- 18: Schlitten
- 19: Kugelspindel
- 20: Kugelspindel
- 21: Antrieb
- 22: Motor
- 23: Motor
- 24: Trägerschlitten.
- 25: Trägerschlitten
- 26: Lagerbock
- 27: Lagerbock
- 28: IC
- 29: Schaft
- 30: Anlage
- 31: Gewindeansatz
- 32: Ausnehmung
- 33: vergrößerter Bereich
- 34: Mutter

## Patentansprüche

1. Wafer-Schneidemaschine (1) mit zwei koaxial zueinander angeordneten, drehbaren Arbeitsspindeln (1, 2), welche jeweils an ihrem Ende eine Trennscheibe (3, 4) tragen und relativ zu einem mit einem Wafer (7) bestückbaren Arbeitstisch (8) bewegbar sind, wobei die beiden Trennscheiben (3, 4) zueinander weisend angeordnet sind und die Arbeitsspindeln (1, 2) in axialer Richtung bewegbar sind und wobei die beiden Trennscheiben (3, 4) zumindest bis zur Bearbeitungsbreite (1) eines in dem Wafer (7) zu bearbeitenden IC-Streifens (9) aneinander annäherbar sind, **dadurch gekennzeichnet, dass** die Nabe (5, 6) jeweils an der Rückseite der Trennscheibe (3, 4) positioniert und auf die an ihrem freien Endbereich mit einem Gewindeansatz (31) versehene Arbeitsspindel (1, 2) aufgesteckt ist, wobei die Nabe (5) mittels einer in einer Ausnehmung (32) aufgenommenen Mutter (34) mit der Arbeitsspindel (1, 2) so verschraubt ist, dass die Mutter (34) über die Außenfläche der Trennscheibe (3, 4) nicht übersteht.

2. Wafer-Schneidemaschine nach Anspruch 1, **dadurch gekennzeichnet, dass** die Trennscheiben (3, 4) in Form flacher Scheiben ausgebildet sind.

3. Wafer-Schneidemaschine nach einem der Ansprüche 1 oder 2, **dadurch gekennzeichnet, dass** die Trennscheiben (3, 4) in Form flacher Ringe ausgebildet sind.

4. Wafer-Schneidemaschine nach einem der Ansprüche 1 bis 3, **dadurch gekennzeichnet, dass** die jeweilige Trennscheibe (3, 4) fest mit der Nabe (5, 6) verbunden ist und dass die Nabe (5, 6) lösbar an der Arbeitsspindel (1, 2) gelagert ist.

## Claims

1. A wafer cutting machine (1) having two rotary working spindles (1, 2) arranged coaxially to each other, the spindles respectively carrying at their ends cut-off wheels (3, 4) and being movable relative to a workbench (8) to be equipped with a wafer (7), the two cut-off wheels (3, 4) being arranged facing each other and the working spindles (1, 2) being movable in an axial direction and the two cut-off wheels (3, 4) being able to approach each other at least up to the processing width (1) of an IC strip (9) to be processed in the wafer (7), **characterized in that** the hub (5, 6) is respectively positioned at the rear side of the cut-off wheel (3, 4) and is mounted on the working spindle (1, 2) being provided with a thread lug (31) at its free end portion, wherein the hub (5) is screwed to the working spindle (1, 2) by means of a nut (34) being received in a recess (32) such that the nut (34) does not protrude beyond the outer surface of the cut-off wheel (3, 4).

2. The wafer cutting machine of claim 1, **characterized in that** the cut-off wheels (3, 4) are shaped in the form of flat discs.

3. The wafer cutting machine of one of claims 1 or 2, **characterized in that** the cut-off wheels (3, 4) are shaped in the form of flat rings.

4. The wafer cutting machine of one of claims 1 to 3, **characterized in that** the respective cut-off wheel (3, 4) is fixedly connected to the hub (5, 6) and that the hub (5, 6) is detachably supported at the working spindle (1, 2).

## Revendications

1. Machine (1) servant à découper des plaquettes, comportant deux arbres de travail (1, 2) rotatifs, placés de manière coaxiale l'un par rapport à l'autre, qui comportent chacun à leur extrémité une meule à découper (3, 4) et peuvent être déplacés par rapport à un plateau de travail (8) sur lequel peut être montée une plaquette (7), les deux meules à découper (3, 4) étant montées de manière à être orientées l'une vers l'autre et les arbres de travail (1, 2) étant mobiles dans la direction axiale et les deux meules à découper (3, 4) pouvant être rapprochées l'une de l'autre au moins jusqu'à la largeur d'usinage (1) d'une bande de circuits intégrés (9) qu'il convient d'usiner dans la plaquette (7), **caractérisée en ce que** le moyeu (5, 6) est positionné respectivement sur la face arrière de la meule à découper (3, 4) et est enfilé sur l'arbre de travail (1, 2) qui est équipé, à son extrémité libre, d'un épaulement fileté (31), le moyeu (5) étant vissé de telle sorte sur l'arbre de travail (1, 2), grâce à un écrou (34) reçu dans un logement (32), que l'écrou (34) ne dépasse pas de la surface extérieure de la meule à découper (3, 4).

2. Machine servant à découper des plaquettes selon la revendication 1, **caractérisée en ce que** les meules à découper (3, 4) se présentent sous la forme de meules plates.

3. Machine servant à découper des plaquettes selon l'une des revendications 1 ou 2, **caractérisée en ce que** les meules à découper (3, 4) se présentent sous la forme de bagues plates.

4. Machine servant à découper des plaquettes selon l'une des revendications 1 à 3, **caractérisée en ce que** chaque meule à découper (3, 4) est reliée fixement au moyeu (5, 6) et **en ce que** le moyeu (5, 6) est monté sur l'arbre de travail (1, 2) de façon détachable.
